# EUROPEAN PATENT APPLICATION

(11) **EP 1 139 602 A1**
(43) Date of publication of application: **04.10.2001**
(21) Application number: 00309845.6
(22) Date of filing: 06.11.2000
(51) Int. Cl.: H04L 12/18, H04L 12/46, H04L 12/42, H04L 12/44

(54) **Method and device for multicasting**

(30) Priority: 31.03.2000 US 539589
(71) Applicant: LUCENT TECHNOLOGIES INC., Murray Hill, New Jersey 07974-0636 (US)
(72) Inventor: Chen, Shiwen, Old Bridge, New Jersey 08857 (US); Yener, Bulent, New York City, New York 10025 (US)
(74) Representative: Buckley, Christopher Simon Thirsk

(57) **Abstract**

A group multicasting network comprises a plurality of ring networks interconnected by a tree network. The rings, which include multicast group members, are connected at the leaf nodes of the tree via bridge nodes. Ring nodes perform a ring-based multicast protocol and the tree nodes perform a tree-based multicast protocol. The bridge nodes act as intermediaries between the ring networks and the tree network and as such, perform both the ring-based multicast protocol and the tree-based multicast protocol.

## Description

### Field of the Invention

The invention relates generally to data networks. More particularly, the invention relates to a network architecture and protocols for group multicasting.

### Background of the Invention

Group multicasting in a data network allows any member of the group to transmit data to all other members of the group. As such, each member of the group can become a sender asynchronously. Group multicasting is also sometimes called many-to-many multicasting. Reliable group multicasting requires that all packets be reliably delivered from a sender to all other members of the group. As such, reliable group multicasting requires transport protocols for detecting and handling packet loss, and for flow and congestion control.

One known architecture for group multicasting is a tree network (also referred to herein simply as a "tree") with its group members executing a tree-based multicast protocol. As is well known, a tree network has a cycle free network topology. While tree-based multicast protocols perform well at low network loads, as the network load increases, their performance declines sharply. One reason for this decline in performance is queuing delay, which is the delay resulting from the necessity of queuing incoming packets at a network node prior to sending the same packet from that node. Another reason for the decline in performance of tree-based multicast protocols at high network loads is due to the necessity of a feedback mechanism. As described above, packet loss detection and recovery requires a mechanism to provide feedback to the packet sender. This feedback is used to initiate a re-send of lost data, and to allow the sender to adjust its transmission rate to provide for flow and congestion control. However, due to the nature of tree networks, the required feedback is difficult to implement. Implementing a positive acknowledgment message (ACK) sent from the receiver upon receipt of data may result in the ACK implosion problem (i.e., sender gets overwhelmed by a large number of ACK messages) at high data loads. Implementing a negative acknowledgment message (NACK) sent from the receiver upon loss detection avoids the ACK implosion problem, but NACK-based multicast protocols cannot provide the feedback required to support flow and congestion control because of the possibility of lost NACKs.

An alternative to a tree network is a ring network (also referred to herein simply as a "ring") with group members executing a ring-based multicast protocol. As is well known, a ring network has a simple cycle (i.e., no self loop) network topology. Ring-based multicast protocols do not suffer from the above described feedback problem because ring-based multicast protocols provide implicit feedback to the sender. This implicit feedback occurs because, by the nature of a ring network, all messages sent by a particular member should eventually make their way back to the sender via the ring. This implicit feedback enables the implementation of efficient adaptive flow control schemes without the ACK implosion problem which arises in tree-based multicast protocols. However, ring networks introduce longer propagation delays due to the longer routing paths inherent in the ring architecture. This propagation delay becomes more serious when the multicast group members are widely dispersed.

### Summary of the Invention

Our novel network architecture combines a tree network architecture and a ring network architecture in such a way as to provide reliable group multicasting with low propagation delay while avoiding congestion problems. In accordance with one aspect of the invention, a plurality of ring networks are interconnected by a tree network. The ring networks are connected to the tree network as leaf nodes of the tree such that, if each ring were considered as a whole, the rings would be leaf nodes of the tree. More particularly, the group multicast member nodes are clustered into disjoint subsets and the members of each subset are connected with a ring network. Each ring performs a ring-based multicast protocol. The ring networks are connected to each other by a backbone tree network which performs a tree-based multicast protocol.

We have discovered that this architecture is advantageous in light of the following observation. It is known that loss in a pure tree architecture occurs most often at the outer portions of the tree, that is, loss occurs mainly on the source links and receiver links, while the backbone links remain relatively loss free. As a result, congestion problems would start, and propagate, from the links connecting the leaf nodes of the tree. By using ring networks (and their implicit feedback mechanism) to provide communication at the edges (i.e., leaf nodes) of the tree, we are able to prevent the vulnerable leaf nodes of the tree from getting congested. Thus, we utilize the low propagation delay characteristics of the tree in the backbone network, while taking advantage of a ring's superior congestion control characteristics at the leaf nodes (where congestion is more likely to be a problem).

In one embodiment of the invention, the ring networks are connected to the tree network via bridge nodes, which act as intermediaries between the ring-based protocol of the ring networks and the tree-based protocol of the tree network. The bridge nodes receive data packets from the tree, and provide them to their local ring. Similarly, the bridge nodes receive data packets which originate from member nodes on their local ring, and provide them to the tree for transmission to the other rings. As such, the bridge nodes must perform both a ring-based multicast protocol and a tree-based multicast protocol.

Bridge nodes detect data loss on the tree by examining received data packets. If the bridge node detects data loss on the tree, the bridge transmits a negative acknowledgment to the tree in order to initiate a re-transmission of the lost data. Bridge nodes detect data loss on a local ring by implicit feedback. If a bridge node detects data loss on the local ring (of a data packet which it provided to its local ring from the tree) the bridge node will re-transmit the data packet to the local ring.

Both the bridge nodes and member nodes may periodically transmit so--called keep-alive messages. If a node transmits a keep-alive message and does not receive the same keep-alive message back (after it traverses the ring) within a predetermined period, the node assumes that the keep-alive message was lost. If a predetermined number of keep-alive messages are lost, a ring failure may be assumed. The bridge nodes and member nodes may also use returned keep-alive messages to detect data loss on rings.

These and other advantages of the invention will be apparent to those of ordinary skill in the art by reference to the following detailed description and the accompanying drawings.

### Brief Description of the Drawings

Fig. 1 shows a network embodying the principles of one aspect of the present invention;
Figs. 2-5 are flowcharts showing the protocol steps performed by a multicast member node;
Fig. 6 shows the format of a ring data packet;
Fig. 7 shows the format of a tree data packet; and
Figs. 8-12 are flowcharts showing the protocol steps performed by a bridge node.

### Detailed Description

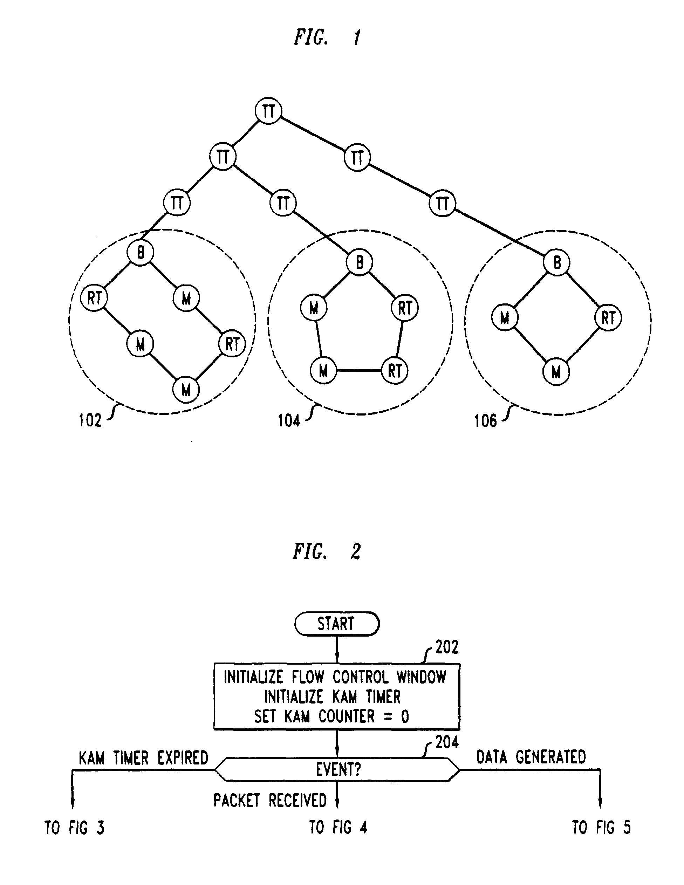

A network embodying the principles of one aspect of the present invention is shown in Fig. 1, which shows three rings 102, 104, 106 connected by a backbone tree. There are four types of network nodes shown in Fig. 1. Member nodes, designated with an "M" in Fig. 1, are multicast group member nodes (hereinafter referred to as member nodes). A member node may be a source of data and must receive data transmitted from other member nodes. Thus, the member nodes are the nodes participating in the group multicasting application (e.g. distance learning, conferencing). Bridge nodes, designated with a "B" in Fig. 1, connect the rings with the backbone tree. Tree transient nodes, designated with a "TT" in Fig. 1, form the backbone tree. Ring transient nodes, designated with an "RT" in Fig. 1, form the backbone ring.

Each ring 102, 104, 106 is connected to the backbone tree network via a bridge node. If each ring is considered as a whole, as a so-called supernode, then it may be seen that, at least from the perspective of the tree, each ring is a leaf node of the tree. The role of the tree is to reliably deliver data packets to each ring, or supernode. Once delivered, the ring takes over responsibility for reliably delivering data packets to the nodes within the ring. The nodes within each ring operate in accordance with a ring protocol, while the nodes of the tree operate in accordance with a tree protocol. It is the role of a bridge node to act as an intermediary between a ring and the tree. As such, and as will be described in further detail below, the bridge nodes must operate in accordance with both ring and tree protocols.

We will now describe the protocols performed by the nodes in order to provide reliable group multicasting. Reliability, in the context of the present group multicasting architecture, means that the following data transport activities are guaranteed:
1. each member node receives all data packets originating from member nodes on its ring;
2. each member node receives all data packets originating from member nodes outside its local ring, which data packets are received by the member node's local bridge node via the tree;
3. each bridge node receives all data packets originating from member nodes on its ring; and
4. each bridge node receives, via the tree, all data packets originating from member nodes outside its local ring.
The protocols performed by the network nodes in order to provide the above defined reliable group multicasting will now be described.

Prior to describing the protocols performed by the network nodes, it is noted that the network nodes shown in Fig. 1 may be implemented using appropriately configured and programmed digital computers. Thus, the functions of the nodes described herein would be performed under control of a processor(s) executing stored computer program code. Programmed digital computers are well known in the art and as such, the processor(s), memory, and other well known components required to implement the network nodes using programmed digital computers are not shown in Fig. 1. One skilled in the art could readily implement the network nodes given the description herein.

We first describe the protocol executed by the member nodes in conjunction with Figs. 2-5. Referring first to Fig. 2, in step 202 initialization of the member node takes place. First, a flow-control window is initialized. In order to provide for congestion control, each member node implements a sliding flow-control window in order to limit the number of packets which it may have simultaneously outstanding on its local ring. A packet is outstanding if it has been sent by the member node but not yet returned back to the member node after traversing the ring. The flow-control window represents the maximum number of packets which a member node may have simultaneously outstanding on the local ring. The flow-control window is initialized to the same value for all member nodes of all rings. During operation, the flow-control windows for all member nodes throughout the network are adjusted such that all member nodes have the same flow-control window. The initial value of the flow-control window will depend on the particular implementation. Factors to consider in determining an initial value for the flow-control window include round trip delay time of packets and packet loss characteristics. The flow-control window is dynamically adjusted based on network performance as will be described in further detail below. Returning again to step 202, a KAM timer and KAM counter are initialized, the use of which will be described below.

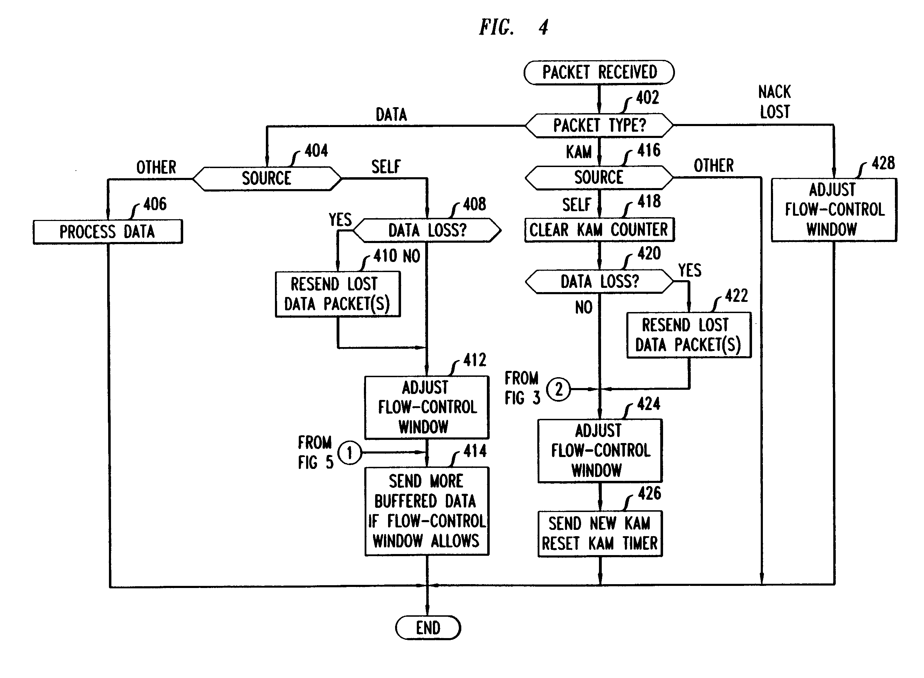

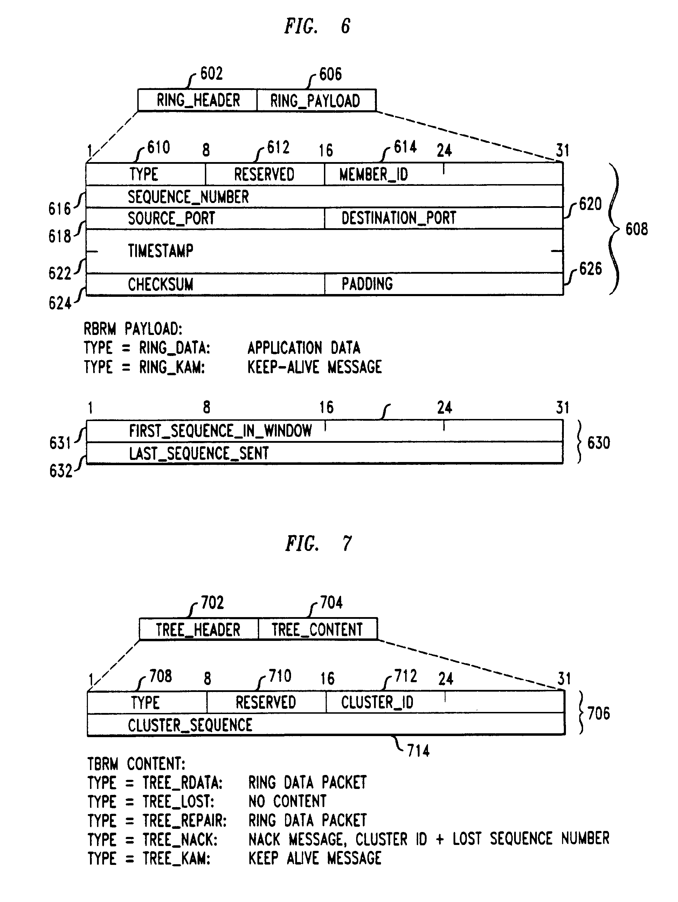

As represented at step 204, various events taking place within the member node will initiate different protocol steps. We will first describe the steps performed upon the receipt of a data packet in conjunction with Fig. 4. Prior to describing the steps, the format of a ring data packet, i.e., a data packet transmitted within a ring, will be described in conjunction with Fig. 6. A ring data packet contains a RING_HEADER 602 and a RING_PAYLOAD 606. The contents of the RING_HEADER 602 are further shown in block 608. The TYPE field 610 may contain one of two entries: RING_DATA, or RING_KAM. If the TYPE field 610 contains RING_DATA, then the RING_PAYLOAD field 606 will contain application specific data. If the TYPE field 610 contains RING_KAM, then the RING_PAYLOAD field 606 will contain a keep-alive message (KAM) of the format shown in block 630, and which will be described below. The RESERVED field 612 of the RING_HEADER 602 is unused in this particular embodiment. The MEMBER_ID field 614 contains an identification of the member node which is the source of the data packet. The SEQUENCE_NUMBER field 616 contains the sequence number of this data packet for the particular member node. Thus, each member node assigns consecutive sequence numbers to each of its transmitted packets. The SOURCE_PORT field 618 contains an identification of the particular port of the member node from which the packet was transmitted. The DESTINATION_PORT field 620 contains an identification of the particular destination port of the member node to which the packet is addressed. The TIMESTAMP field 622 contains an indication of the time of transmission of the data packet. The CHECKSUM field 624 contains a checksum for the data packet. The PADDING field 626 contains padding bits as required.

Referring now to Fig. 4, upon receipt of a data packet, the member node determines, in step 402, the type of the data packet by examining the TYPE field 610 of the received data packet. If the data packet contains data, i.e., the TYPE field 610 contains RING_DATA, then in step 404 the member node determines whether it was the source of the data packet by examining the MEMBER_ID field 614 of the received data packet. If the MEMBER_ID field 614 contains an identification of a member node other than an identification of the receiving member node, then the receiving member node determines that the received data packet was from another member node and in step 406 the member node processes the received data in accordance with the group multicasting application being implemented, and the processing of the received data packet ends.

If the member node determines in step 404 that it was the source of the data, i.e., the MEMBER_ID field 614 contains an identification of the receiving member node, then processing continues with step 408 in which the member node determines whether data loss has occurred. In order to determine if data loss has occurred, the member node examines the sequence number field 616 of the data packet. The member node compares the sequence number of the present data packet with the sequence number of the most recently received data packet, for which it was the source. If the member node detects a gap in sequence numbers, the member node determines that the data packets associated with the missing sequence number(s) was lost. Thus, an advantage of a ring protocol is seen here in that a sending member node receives implicit feedback with respect to transmitted data packets. Because of the ring architecture, when a member node transmits a data packet, that same data packet should eventually return to that member node after traversing the ring. Thus, the member node receives implicit feedback (implicit because there is no need for any extra control messages) of lost packets.

Returning now to the protocol steps, if loss is detected, then in step 410 the member node re-transmits the lost packet(s). After step 410, or if there was no loss, the protocol continues with step 412 at which time the flow-control window is adjusted. If loss was detected in step 408, then the flow-control window is decreased. If no loss was detected in step 408, then the flow-control window is increased.

There are various techniques which may be used to initialize and adjust the flow-control window. We now describe one embodiment for adjusting the flow control window of member nodes. Initially, the flow-control window may be initialized as a relatively small size. In this embodiment, the member-node may be in one of two states: probing or congestion avoidance. Initially, the member nodes are considered to be in the probing state and are thus attempting to determine network performance. A member nodes remains in probing state as long as it does not detect data loss. When a member node detects packet loss, the member node transitions to the congestion avoidance state in an attempt to avoid further congestion. A member node may detect data loss in one of three ways: 1) by detecting gaps in sequence numbers as described above in conjunction with step 408; 2) by receiving a NACK message (as described below in conjunction with step 428); and 3) by receiving a LOST message (also as described below in conjunction with step 428). Once a member node is in congestion avoidance state, it transitions back to probing state upon receipt of a NACK message.

Returning to step 412, if no loss was detected in step 408, then the flow-control window is increased by a value *dw*_{*up*} (the value of which will be described below). If loss was detected in step 408, then the flow-control window is decreased by a value *dw*_{*down*}*.*

The values for *dw*_{*up*} and *dw*_{*down*} are chosen as a function of the following parameters: current flow-control window size (*wsize*), number of multicast senders (*m*), and current protocol state *(state).* One choice for the values of *dw*_{*up*} and *dw*_{*down*} are as follows:
*dw*_{*up*} *=* 1 */ wsize* if *state* = probing *dw*_{*up*} *=* 1 */* (*wsize**m) if *state =* congestion avoidance *dw*_{*down*} = 1
The rational for choosing *dw*_{*up*} and *dw*_{*down*} in this manner is as follows. Since we are dealing with a multicasting protocol, with many potential data sources, small adjustments at many senders may have a large impact on the overall network performance. Thus, when a member node is operating in the probing state, the flow-control window may be increased by small amount (1 / *wsize*). However, if the member node is operating in congestion avoidance state, the flow-control window may only be increased by a smaller amount ((*wsize**m))*.* Thus, when operating in congestion avoidance state, we are very conservative and only allow the flow-control window to increase by a small amount.

The above described flow-control window technique uses packet loss to detect network congestion and trigger a decrease in the size of the flow-control window. In an alternate embodiment, the flow-control window is adjusted based on data packet delay time. More particularly, this embodiment of flow-control window management uses round trip delay as an indication of congestion status. The flow-control window is regulated so as to maintain data packet round trip delay time under a certain threshold.
In this embodiment, every time a data packet returns to a member node, the round trip delay time *t*, is measured and the highest value of *t* (t_max), and the lowest value of *t*(t_min), are maintained. Further an experimental parameter *alpha* may be used for performance tuning. In one embodiment, an appropriate value for alpha is 0.5, but of course may vary in order to improve performance of the network. Thereafter, for every 4*t* period, the flow-control window is either increased or decreased by a value of 1/*wsize* as follows: 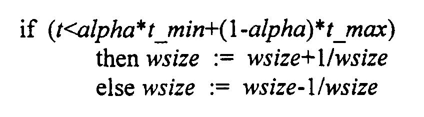 We have found, during simulation studies, that this second embodiment, in which the flow-control window is adjusted based on data packet delay time, is effective in preventing network congestion, and as such has better delay performance at high network loads. As the price for this improved delay performance, this second embodiment shows lower goodput (i.e., throughput after excluding retransmissions and control traffic) as compared to the first embodiment in which the flow control window is adjusted based on packet loss detection.

Returning now to Fig. 4, after the flow control window has been adjusted, in step 414 the member node transmits additional data from its sending buffer if the flow control window allows and the processing of the received data packet ends.

Note that the use of the implicit feedback of a ring network in order to detect packet loss, as described above, could result in so-called flow-control window deadlock. This deadlock occurs if a number of member node packets equal to the number of packets in the member node's flow-control window are lost. In such a situation, none of the member node's own data packets will be received, and thus the test at step 404 will never result in performing the steps associated with the "self' branch. As such, there is no opportunity for the flow-control window to be adjusted up, and as a result the member node's buffer will continue to fill up, but no further data packets will be sent. In order to handle this situation, a keep-alive message (KAM), is used as follows.

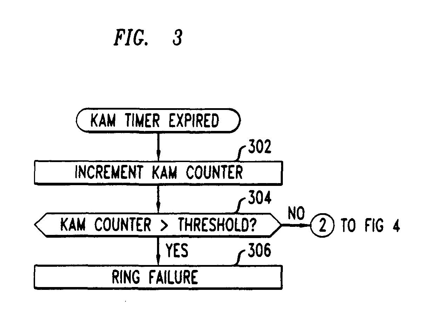

Referring to Fig. 6, the format of a KAM packet is shown in block 630. Thus, when the TYPE field 610 of the RING-HEADER 602 contains RING_KAM, the RING- PAYLOAD 606 will contain the information shown in block 630. Specifically, the packet will contain the sequence number of the first data packet-sent following the previous KAM packet (i.e., FIRST_SEQUECE_IN_WINDOW 631), and the sequence number of the last packet sent prior to the current KAM packet (i.e., LAST_ SEQUENCE_SENT 632). Now, referring again to Fig. 2 and step 202, it is recalled that a KAM timer and KAM counter were initialized. The KAM timer is set to an amount of time within which it is expected that a transmitted KAM packet would be received back by the sending member node. The KAM counter represents the number of KAM packets which have been lost, and is initialized to zero. The use of a KAM packet in order to prevent flow-control window deadlock will become apparent from the following description in conjunction with Figs. 2, 3, and 4. Referring to Fig. 2, if the event detected in step 204 is the expiration of the KAM timer, then it is assumed that a KAM packet has been lost and the protocol steps shown in Fig. 3 are performed. First, in step 302, the KAM counter is incremented to indicate that another KAM packet has been lost. In step 304 the KAM counter is compared against a threshold. The threshold represents the number of KAM packets which must be lost prior to assuming that there has been a ring failure. If that threshold has been reached, then a ring failure is assumed in step 306 and appropriate exception processing takes place. If the threshold has not been reached, then control passes to step 424 of Fig. 4, at which point the flow-control window is adjusted. When executing step 424 after step 304, the flow-control window of the member node is adjusted down because the loss of a KAM suggests network congestion. Thereafter, in step 426, a new KAM packet is sent and the KAM timer is reset.

Referring now to step 402, if a received packet is determined to be a KAM packet, then the member node continues processing with protocol step 416. In step 416 the receiving member node determines whether it was the source of the received KAM packet by inspecting the MEMBER_ID field 614 (Fig. 6) of the KAM packet. If it is a KAM packet of another member node, the packet is ignored. If it is a KAM packet of the receiving member node, then the KAM counter is cleared in step 418. In step 420, the member node determines if there has been any data loss by inspecting the contents 630 of the KAM packet. As describe above, the KAM packet contains the sequence number of the first data packet sent following the previous KAM packet (i.e., FIRST_SEQUENCE_IN_WINDOW 631), and the sequence number of the last packet sent prior to the current KAM packet (i.e., LAST_SEQUENCE_SENT 632). If the member node determines that it has received back all data packets within the sequence range (inclusively) identified in the KAM packet, then the member node determines that there is no data loss. If the member node determines that it has not received back all data packets within the sequence range (inclusively) identified in the KAM packet, then the member node determines that there has been data loss and the member node re-transmits the lost data packet(s) in step 422. After step 422, or if there was no loss, the protocol continues with step 424 at which time the flow control window is adjusted in the same manner as described above in conjunction with steps 408, 410, and 412. Step 426 is performed as described above.

Referring again to step 402, if a received packet is determined to be a NACK or LOST packet, then the member node adjusts the flow-control window in step 428. Again, the receipt of a NACK or LOST packet indicate network congestion and the member node adjusts the flow-control window down. NACK and LOST packets will be described below.

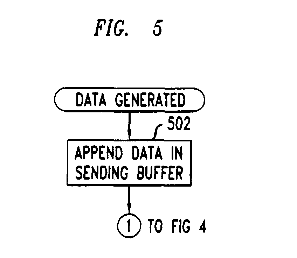

Referring back to Fig. 2, if the event detected in step 204 is the generation of new data to be transmitted by the member node, then the protocol steps shown in Fig. 5 are performed. In step 502, the newly generated data is appended to the member node's sending buffer, and in step 414 (Fig. 4) the member node attempts to send data from its sending buffer if its flow-control window allows.

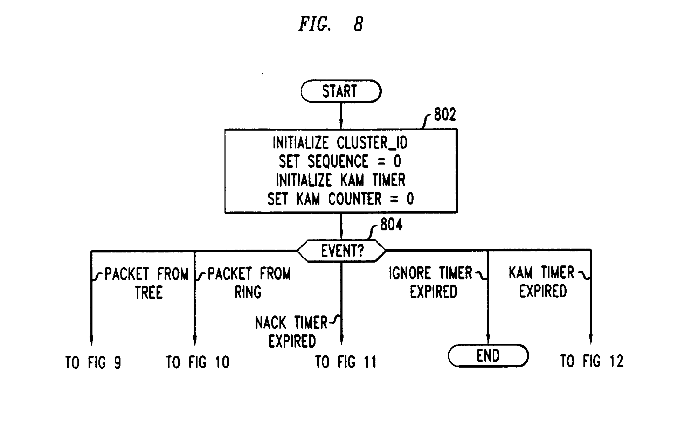

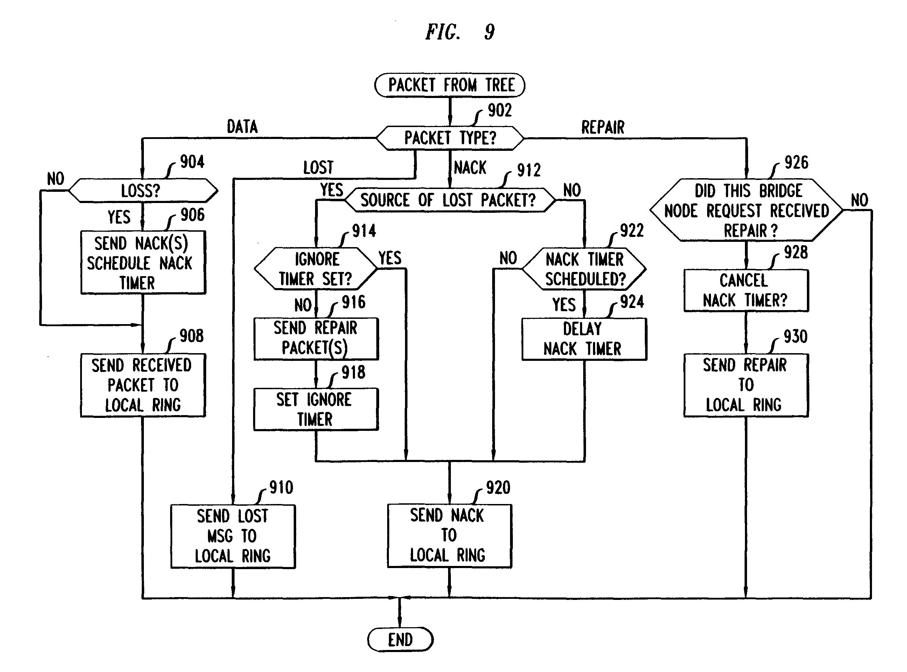

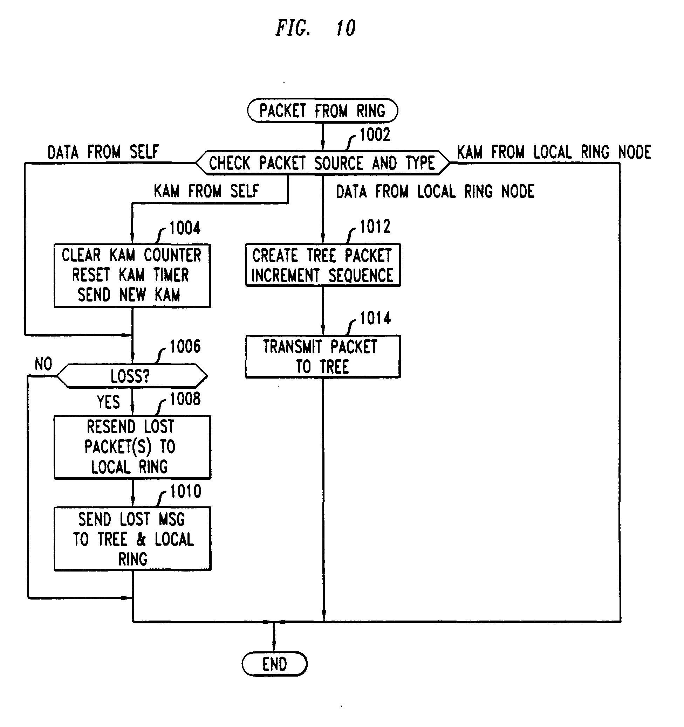

The protocol steps performed by the bridge nodes will now be described in conjunction with Figs. 8-12. Referring first to Fig. 8, in step 802 initialization of the bridge node takes place. First, CLUSTER_ID is set to an identification of the local ring on which the bridge node is operating. Each ring has a unique CLUSTER_ID. SEQUENCE represents the sequence number of the packets transmitted by the bridge node to the tree, and is initialized to 0. Also in step 802, the KAM timer is initialized and the KAM counter is set to 0.

Various events will trigger different protocol steps, as represented by step 804. First, if the bridge node receives a packet from the tree, the protocol steps shown in Fig. 9 are performed as follows. First, in step 902, the type of the received packet is determined. At this point, the format of a data packet that is transmitted on the tree network, called a TREE packet, will be described in conjunction with Fig. 7. A tree packet contains a TREE_HEADER 702 and TREE_CONTENT 704. The contents of the TREE_HEADER 702 are further shown in block 706. The TYPE field 708 may contain one of five entries: TREE_RDATA, TREE_LOST, TREE_REPAIR, TREE_NACK, TREE_KAM. If the TYPE field 708 contains TREE_RDATA, then the packet is a data packet and the TREE_CONTENT field 704 will contain application specific data. If the TYPE field 708 contains TREE_LOST, then the packet is a LOST packet and there is no content in the TREE_CONTENT field 704. If the TYPE field 708 contains TREE_REPAIR, then the packet is a repair packet and the TREE_CONTENT field 704 contains application specific data. If the TYPE field 708 contains TREE_NACK, then this packet is a NACK packet and the TREE_CONTENT field 704 will contain a CLUSTER_ID and a sequence number (SEQUENCE) identifying a lost data packet. If the TYPE field 708 contains TREE_KAM, then the packet is a tree KAM packet and the TREE_CONTENT field 704 is not used. The processing of a TREE_KAM packet will be described in further detail below. The RESERVED field 710 of the TREE_ HEADER 702 is unused in this particular embodiment. The CLUSTER_ID field 712 contains an identification of the ring on which the member node which is the source of the data packet is a member. The CLUSTER_SEQUENCE field 714 contains the sequence number (SEQUENCE) of this data packet for the particular bridge node. Thus, in a manner similar to the way in which each member node assigns consecutive sequence numbers to each of its transmitted packets, bridge nodes also assign consecutive sequence numbers to packets transmitted via the tree.

Returning now to Fig. 9, the packet type is determined in step 902 by examining the TYPE field 708 of the TREE_HEADER 702. If the TYPE field contains TREE_RDATA, then this is a data packet and processing continues in step 904 in which it is determined whether any data packets have been lost. Each bridge node maintains the last data packet sequence number (SEQUENCE) received from each of the other rings (the rings being identified by a CLUSTER_ID). Thus, upon receipt of a data packet containing a particular CLUSTER_ID in field 712, the bridge node compares the CLUSTER_SEQUENCE number in field 714 with the last packet sequence number received from the identified ring. If the bridge node detects a gap in sequence numbers, the bridge node determines that the data packets associated with the missing sequence number(s) were lost on the tree. In such a case, the member node transmits a NACK packet(s) in step 906 and schedules a NACK timer(s) associated with the sent NACK packet(s). As described above, the NACK packet will contain an identification of the ring (CLUSTER_ID) which was the source of the lost data, and the NACK packet will contain the sequence number of the lost packet. The NACK packet is transmitted to all bridge nodes on the tree. The NACK timer is used to handle the situation in which the NACK, or the corresponding response to the NACK (i.e., the repair message) is lost. As will be described in further detail below in conjunction with Fig. 11, if the NACK timer expires, a new NACK is sent. At this point, upon sending of the initial NACK, the NACK timer is advantageously set to a time value of three times the one way travel time of the packet (i.e., one round trip + one way extra). Following step 906, or if no loss was detected in step 904, the bridge node transmits the received data packet to its local ring in step 908. Upon transmitting a packet received from the tree onto its local ring, the bridge node also appends the packet to the end of a ring_sent_buffer stored in the bridge node. As will be described in further detail below, this ring_sent_buffer is used to detect data loss of packets forwarded by the bridge from the tree to the local ring. Processing of a received data packet then ends.

If the test instep 902 determines that the received packet is a LOST packet (i.e., the packet's TYPE field 708 contains TREE_LOST), then the bridge node transmits the LOST packet to the local ring in step 910. The LOST packet is added to the bridge node's ring_sent_buffer. The receipt of a LOST packet by a bridge node indicates that another ring has experienced lost data, and the bridge node from that ring has sent a LOST packet in order to advise all other rings of the data loss. As described above in conjunction with step 428 of Fig. 4, when a member node receives a LOST packet, it adjusts its flow control window appropriately. The processing of a received data packet ends following step 910.

If the test in step 902 determines that the received packet is a NACK packet (i.e., the packet's TYPE field 708 contains TREE_NACK), then the bridge node proceeds with step 912 and determines whether it was the source of the lost packet. The bridge node determines whether it was the source of the lost packet by examining the CLUSTER_ID field 712 of the received NACK packet to determine if its ring is identified. If the receiving bridge node is the source of the lost packet, then in step 914 the bridge node determines whether an ignore timer for this particular lost packet has been set. (The purpose of the ignore timer will be described in conjunction with step 918). If the ignore timer has not been set, then in step 916 the bridge node transmits a repair packet containing the data which was lost (as identified by the lost sequence number in the TREE_CONTENT field 704). In step 918 the bridge node sets an ignore timer. The ignore timer is advantageously set to the round trip time from the bridge node sending the repair to the bridge node which sent the NACK. During the ignore time period, the bridge node will ignore any further received duplicate NACKs because it is presumed that the bridge node(s) transmitting the duplicate NACK(s) will receive the repair packet already sent. Thus, if step 914 determines that the ignore timer is set, then steps 916 and 918 will not be performed. Thus, after step 918, or if the ignore timer is set, processing continues with step 920 during which the received NACK packet is sent to the receiving bridge node's local ring and the NACK packet is added to the bridge node's ring_sent_buffer. As described above in conjunction with step 428 (Fig. 4), upon receipt of a NACK packet a member node will adjust its flow-control window appropriately.

Returning to step 912, if the bridge node determines that it was not the source of the lost packet, then in step 922 the bridge node determines whether it has previously, in step 906, scheduled a NACK timer for the particular lost data packet (i.e., has the bridge node already detected loss of the data packet associated with the received NACK packet and sent its own NACK packet in step 906). If yes, then in step 924 the bridge node delays its own NACK timer for the particular lost packet (i.e., it increases the time period and thus delays the expiration of the NACK timer), in order to prevent overwhelming the source of the lost packet with NACKs. Following step 924, or if the test in step 922 indicates that the bridge node has not previously scheduled a NACK timer for the particular lost data packet in step 906, then in step 920 the received NACK packet is sent to the receiving bridge node's local ring and the NACK packet is added to the bridge node's ring_sent_buffer. Processing of the received packet ends following step 920.

If the test in step 902 determines that the received packet is a repair packet (i.e., the packet's TYPE field 708 contains TREE_REPAIR), then the bridge node proceeds with step 926 and determines whether it requested the repair by transmitting a NACK packet in step 906. If it did, then in step 928 the NACK timer is canceled because the repair packet was received, and in step 930 the repair packet is sent to the bridge node's local ring and the repair packet is added to the bridge node's ring_sent_buffer. Following step 930, or if the test in step 926 is NO, processing of the received packet ends.

Returning now to Fig. 8, if the event detected in step 804 is an incoming packet from the bridge node's local ring, then processing continues with the steps shown in Fig. 10. First, in step 1002 the source and the type of the packet is determined by examining the TYPE field 708 in the TREE_HEADER 702 of the packet. If the TYPE field 708 contains the prefix TREE, then the bridge node determines that it was the source of the packet because the packet is a tree packet and the only way such a packet could have made its way onto the local ring is if it were forwarded from the tree by the bridge node. If the TYPE field 708 contains the prefix RING, then the bridge node determines that one of the member nodes of the local ring was the source of the packet because the packet is a ring packet. The particular type of the packet is determined by examining the suffix of the TYPE field 708.

If the TYPE field 708 of the packet contains TREE_RDATA, then the bridge node determines that it was the source of the data packet and that the packet contains data that the bridge node received from the tree network and forwarded to the member nodes on the local ring, and processing continues with step 1006. In step 1006 the bridge node determines whether there was any data loss by comparing the received packet to the bridge node's ring_sent_buffer. As described above, each time the bridge node forwards a packet received from the tree to the local ring, the bridge node appends the packet to the end of a ring_sent_buffer. As packets are received by the bridge node from the local ring, the bridge node examines the ring_sent_buffer. The received packet should be the same as the packet at the head of the ring_sent_buffer. If it is, then the packet at the head of the ring_sent_buffer is removed from the ring_sent_buffer. If the packet at the head of the ring_sent_buffer is not the same as the received packet, then it is determined that the packet at the head of the ring_sent_buffer was lost on the local ring. In such a case, the lost packet (i.e., the packet at the head of the ring_sent_buffer) is resent to the local ring in step 1008, and the lost packet is removed from the head of the ring_sent_buffer and appended to the end of the ring_sent_buffer. In step 1010, a LOST packet is sent to the tree and to the local ring so that member nodes will be notified of a lost packet and will, in response, adjust their flow control windows as described above in conjunction with step 428 of Fig. 4. Processing of the incoming packet ends following step 1010.

If the bridge node determines, in step 1002 that the incoming packet is its own KAM packet (i.e., the type field of the packet header contains TREE_KAM), then in step 1004 the bridge node clears its KAM counter, resets the KAM timer, and transmits a new KAM packet. At this point, the newly sent KAM packet is also added to the ring_sent_buffer. Processing then continues with step 1006 with the bridge node determining if there was data loss as described above. Thus, the bridge node compares the received KAM packet to the packet at the head of the bridge node's ring_sent_buffer. If the packet at the head of the bridge node's ring_sent_buffer does not match the received KAM packet, then data loss has been detected, and processing continues with steps 1008 and 1010 as described above. If the packet at the head of the bridge node's ring_sent_buffer matches the received KAM packet, then processing of the incoming packet ends.

Returning to step 1002, if the TYPE field 708 of the incoming packet contains RING_DATA, then the bridge node determines that one of the member-nodes of the local ring is the source of the data packet and processing continues with step 1012. In step 1012 the bridge node packages the member node's local ring packet into a tree packet as follows. The bridge node creates a tree packet as shown in Fig. 7 with TREE_HEADER 702 and TREE_CONTENT 704. The TYPE field 708 of the header 702 contains TREE_RDATA, the CLUSTER_ID field 712 contains an identification of the bridge node's local ring, and the CLUSTER_SEQUENCE field 714 contains the packet sequence number (SEQUENCE) of this data packet. The TREE_CONTENT 704 will contain the entire RING packet received by the bridge node. Also in step 1012 the bridge node increments the sequence counter SEQUENCE. The bridge node transmits the newly created TREE packet to the tree network in step 1014. Following step 1014, processing of the incoming data packet ends.

Returning to step 1002, if the TYPE field 708 of the incoming packet contains RING_KAM, then the bridge node determines that the packet is KAM packet from one of the ring's member nodes. In this case, the bridge node ignores the packet and processing of the incoming data packet ends.

Returning now to Fig. 8, if the event detected in step 804 is the expiration of a NACK timer, then processing continues with the steps shown in Fig. 11. As described above, the NACK timer is used to allow the bridge node to detect the situation in which a transmitted NACK, or the corresponding response to the NACK (i.e., the repair message), is lost. If the NACK timer expires, the bridge node assumes that the NACK and/or the corresponding repair packet was lost on the tree. In this case, in step 1102, the bridge node transmits a duplicate of the NACK packet associated with the expired NACK timer. The bridge node resets the NACK timer in step 1104. Processing of the expired NACK timer ends after step 1104.

Returning now to Fig. 8, the bridge node takes no action upon the expiration of an ignore timer. As described above in conjunction with step 918, the ignore time is used to ignore duplicate NACKs, and the expiration of a NACK timer requires no action on the part of the bridge node.

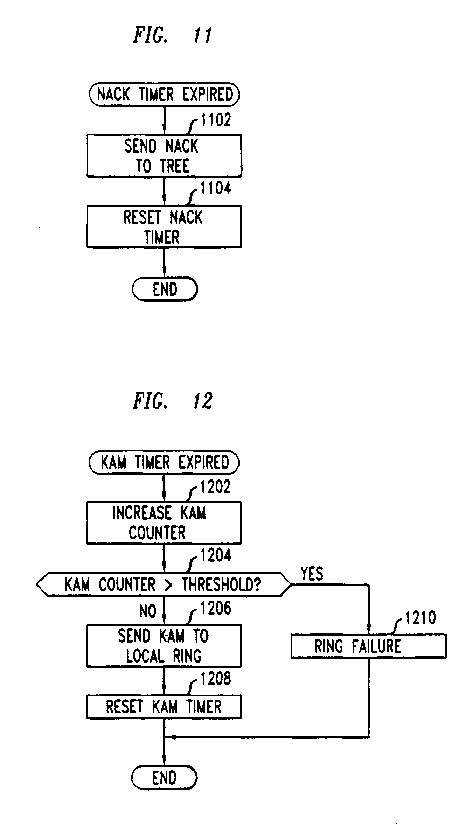

Returning again to Fig. 8, if the event detected in step 804 is the expiration of the bridge node's KAM timer, then processing continues with the steps shown in Fig. 12. In step 1202 the bridge node increases its KAM counter, which counts the number of consecutively lost KAM packets. In step 1204 the KAM counter is compared with a threshold which represents the number of KAM packets which must be lost prior to assuming that there has been a ring failure. If that threshold has been reached, then a ring failure is assumed in step 1210 and appropriate exception processing takes place. If the threshold has not been reached, then a new KAM packet is sent in step 1206 and the KAM timer is reset in step 1208. The purpose of the KAM in a bridge node is to protect against the event that all packets transmitted from a bridge node are lost on the local ring.

A member node may terminate its multicast session (i.e., terminate participation in the multicast application and leave the multicast group) as follows. A member node s leaves the session by sending a control message END(s,-) on the local ring. After leaving the session, the member node s becomes a ring transient node. When all member nodes on a particular local ring have terminated their multicast sessions, the bridge node for that ring transmits a control message END(CLUSTER_ID, CLUSTER_SEQUENCE), where, as described above in conjunction with Fig. 7, CLUSTER_ID identifies the ring and CLUSTER_SEQUENCE contains the sequence number of the last data packet sent from the ring. This bridge node control message must be acknowledged by the other bridge nodes. Thus, upon receipt of an END(CLUSTER_ID, CLUSTER_SEQUENCE), a receiving bridge node will send an appropriate acknowledgment to the sending bridge node. When the sending bridge node receives acknowledgments from all other bridge nodes, it ceases communication with the tree. The terminating bridge node will also associate a timer with its END message to handle the situation in which its END message, or the associated acknowledgments, get lost on the tree. Upon expiration of such a timer, the terminating bridge node will re-transmit its END message.

The above described protocols are used to implement reliable group multicasting in accordance with the present invention. Thus, referring again to Fig. 1, the bridge nodes (designated with a B) perform the protocol described above in conjunction with Figs. 8-12, while the member nodes (designated with an M) perform the protocol describe above in conjunction with Figs. 2-5, in order to implement the reliable group multicasting in accordance with the invention.

As would be understood by one skilled in the art, the protocols described above describe one aspect of the functioning of the network nodes shown in Fig. 1. Other protocols would also be needed in order to implement some of the lower level network operations. For example, nodes implementing a ring must also perform a lower level ring routing protocol in order to perform such basic ring network functions as maintaining a valid multicast ring, forwarding packets between ring neighboring nodes, terminating packet transmission when a packet has finished touring the ring, and providing arriving packets to the above described higher level reliable group multicasting protocol where appropriate. For example, the ring transient nodes (RT), member nodes (M) and bridge nodes (B) all must perform this lower level ring routing protocol because all these nodes are part of the ring networks. In the case of a member node, the lower level ring routing protocol must provide incoming packets to the higher level member node reliable group multicasting protocol. In the case of a bridge node, the lower level ring routing protocol must provide incoming packets to the higher level bridge node reliable group multicasting protocol. Such a lower level ring routing protocol could be implemented by one skilled in the art.

Further, the nodes implementing the tree network must perform a low level tree routing protocol in order to perform such basic tree network functions as maintaining a valid multicast tree, forwarding packets between tree neighboring nodes, and providing arriving packets to higher level protocols as appropriate. For example, the tree transient nodes (TT) and bridge nodes (B) both must perform this lower level tree routing protocol because both of these nodes are part of the tree network. In the case of a bridge node, the lower level tree routing protocol must provide incoming packets to the higher level bridge node reliable group multicasting protocol. Such lower level tree routing protocols are well known in the art as, for example, described in S. Deering, et al., *The PIM Architecture for Wide-Area Multicast Routing,* IEEE/ACM Transactions on Networking, Vol. 4, No. 2, pages 153-162, 1996, and T. Ballardie, P. Francis and J. Crowcroft, *Core Based Tree (CBT): An Architecture for Scalable Inter-Domain Multicast Routing,* Proc. ACM SIGCOMM 193, Oct. 1993, pp. 85-95, both of which are incorporated by reference herein.

It would be understood by one skilled in the art that the network diagram of Fig. 1 represents the logical, and not necessarily (although possibly) physical, configuration of the network. That is, the nodes which make up the tree network, and their respective lower level routing protocols, are configured to route packets in accordance with a tree network configuration, and the nodes which make up the ring network, and their respective lower level routing protocols, are configured to route packets in accordance with a ring network configuration. Based on this configuration, the logical routing of packets results in the logical network configuration as shown in Fig. 1. However, the physical configuration of the nodes and their physical interconnection may be different and may include intervening nodes (not shown) which merely route packets in accordance with the physical configuration of the network.

The performance of the overall multicast network will be influenced by how the network is partitioned. Assume a multicast group having m members which may be partitioned into g clusters. At the extremes, as g approaches 1, we approach a single ring architecture, and as m approaches g, then we approach a single tree architecture. An advantageous partitioning would have g being large enough to benefit from the low propagation delay of a tree network, while still maintaining the congestion control benefit of the ring networks.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

## Claims

1. A network comprising:
a plurality of ring networks interconnected by a tree network.

2. The network of claim 1 wherein said ring networks are connected as leaf nodes of said tree network.

3. The network of claim 1 wherein said ring networks are connected to said tree network by bridge nodes.

4. The network of claim 1 wherein said ring networks are logical ring networks.

5. The network of claim 1 wherein said tree network is a logical tree network.

6. The network of claim 1 wherein each of said ring networks comprises:
at least one multicast member node.

7. A network comprising:
a first plurality of nodes configured to implement a first ring network;
a second plurality of nodes configured to implement a second ring network; a third plurality of nodes configured to implement a tree network;
wherein said first and second ring networks are connected by said tree network.

8. The network of claim 7 wherein said first and second ring networks are connected as leaf nodes of said tree network.

9. The network of claim 7 wherein said first and second ring networks are connected to said tree network by a bridge node.

10. The network of claim 7 wherein said first and second plurality of nodes further comprise multicast member nodes.

11. In a network comprising a plurality of ring networks interconnected by a tree network, a method for operation of a bridge node which connects a ring network to said tree network, said method comprising the steps of:
transmitting data packets received via said ring network to said tree network; and
transmitting data packets received via said tree network to said ring network.

12. The method of claim 11 further comprising the step of:
transmitting a negative acknowledgment message to said tree network upon detecting loss of a data packet from said tree network

13. The method of claim 11 further comprising the step of:
re-transmitting a data packet received via said tree network to said ring network upon detecting loss of said data packet on said ring network.

14. The method of claim 11 further comprising the step of:
re-transmitting a data packet received via said ring network to said tree network upon receipt of a negative acknowledgment message from said tree network.

15. The method of claim 11 further comprising the step of:
transmitting a lost message to said tree network upon detecting loss of a data packet on said ring network.

16. The method of claim 11 wherein said step of transmitting data packets received via said ring network to said tree network comprises the step of:
adding a ring identification and a sequence number to said data packets.

17. The method of claim 11 further comprising the step of:
periodically generating a keep-alive message; and
transmitting said keep-alive message to said ring network.

18. The method of claim 17 further comprising the step of:
detecting data loss based, at least in part, on a received keep-alive message.

19. The method of claim 17 further comprising the step of:
determining that a previously transmitted keep-alive message is lost if it is not received within a predetermined time period from its transmission.

20. The method of claim 19 further comprising the step of:
determining that a ring failure has occurred if a predetermined number of keep-alive messages are determined to be lost.

21. A method for use in a network comprising a plurality of ring networks interconnected by a tree network via bridge nodes, said ring networks comprising multicast member nodes, said method comprising the steps of:
bridge nodes detecting data loss on a ring network by implicit feedback; and
bridge nodes detecting data loss on said tree network by examining received data packets.

22. The method of claim 21 further comprising the steps of:
member nodes detecting data loss on a ring network via implicit feedback; and
upon detection of data loss, member nodes adjusting a flow control window.

23. The method of claim 21 further comprising the step of:
upon a bridge node detecting data loss on a ring network, said bridge node transmitting a lost message to said tree network.

24. The method of claim 21 further comprising the step of:
upon a bridge node detecting data loss on the tree network, said bridge node transmitting a negative acknowledgment to said tree network.

25. The method of claim 21 further comprising the step of:
member nodes periodically transmitting keep-alive messages on said rings.

26. The method of claim 25 further comprising the step of:
a member node determining that a keep-alive message has been lost if said keep-alive message is not received within a predetermined time period from its transmission.

27. The method of claim 26 further comprising the step of:
a member node determining a ring failure if a predetermined number of keep-alive messages are lost.

28. The method of claim 25 further comprising the step of:
a member node detecting data loss based, at least in part, on receipt of a previously transmitted keep-alive message.

29. The method of claim 21 further comprising the step of:
member nodes terminating a multicast session by transmitting an end control message.

30. The method of claim 29 further comprising the step of:
a bridge node disconnecting from said tree network upon receipt of an end control message from all member nodes on the bridge node's local ring.
